# EUROPEAN PATENT APPLICATION

(11) **EP 4 477 445 A1**
(43) Date of publication of application: **18.12.2024**
(21) Application number: 23179164.1
(22) Date of filing: 14.06.2023
(51) Int. Cl.: B60K 35/00

(54) **DRIVER DISTRACTION DETECTION SYSTEM AND METHOD FOR DETECTING A DRIVER DISTRACTION**

(71) Applicant: Bayerische Motoren Werke Aktiengesellschaft, 80809 München (DE)
(72) Inventor: Germiniasi da Silveira, Dennis Brown, 80636 München (DE)

(57) **Abstract**

Provided is a driver distraction detection system (1) for a motor vehicle (50). The driver distraction detection system (1) comprises an ultrasonic device (10) comprising a first control device (11) and at least one ultrasonic transmitter (12) for detecting a motion of a driver of the motor vehicle (50), and at least one second control device (20) for controlling at least one application. The first control device (11) is configured to obtain (S1) motion data of the detected motion from the at least one ultrasonic transmitter (12), determine a driver distraction based on the obtained motion data and using artificial intelligence, if the detected motion corresponds to a motion of the driver towards a passenger side of the motor vehicle (50), and, if the driver distraction is determined, notify (S3) the at least one second control device (20) that the driver is distracted. The at least one second control device (20) is configured to output a predetermined control command to the at least one application in reaction to the at least one second control device (20) being notified that the driver is distracted (S4).

## Description

The present disclosure relates to a driver distraction system, a motor vehicle comprising the driver distraction system, and/or a method for detecting a driver distraction. Additionally, or alternatively, there is provided a computer program comprising instructions that, when the program is executed by a computer, cause the computer to at least partially execute the method. Additionally, or alternatively, there is provided a computer-readable medium comprising instructions that, when a computer executes the instructions, cause the computer to at least partially execute the method.

Modern motor vehicles offer a variety of infotainment opportunities, such as a display and/or touchscreen on a passenger side (co-driver side) for, e.g., displaying a video while the respective motor vehicle is driving.

For safety reasons, a driver should not be distracted by any means, including by an entertainment system present in the motor vehicle. For instance, while a passenger, such as the co-driver, is watching some video content on a display, the driver should not be distracted by it. Accordingly, mechanisms for preventing or at least reducing any driver distraction are to present in the motor vehicle.

DE 10 2017 214 539 A1 describes a method for detecting a driver's attention of a vehicle by determining a driver's line of sight. An attention value that is representative of a driver's attention for a given range is continuously detected. The attention value is determined by determining whether the driver is looking within the specified range, depending on the determined line of sight. If it has been determined that the driver is looking in the predetermined area, the attention value is determined by means of a predetermined charging function.

DE 10 2013 013 227 A1 describes a motor vehicle with a display unit arranged in the passenger compartment and with a monitoring device which is designed to monitor a current posture of the driver and to interrupt the display of a display content of the display unit in the event that the driver tries to view the display unit. The monitoring device comprises a 3D camera unit and a calculation unit, wherein at least one optical sensor unit of the 3D camera unit is arranged above the passenger compartment and adapted to at least one of the head of the driver to generate 3D image data from above, and wherein the calculation unit is adapted to determine a position of the head and/or movement of the head.

US 11,485,284 B2 describes a method for determining distraction of a driver of a vehicle, including sampling sensor measurements at an onboard system of the vehicle, generating an output indicative of a distracted state, and determining that the driver of the vehicle is characterized by the distracted state.

In view of the prior art, the object of the present disclosure is to provide a device and/or method, each of which is suitable for enriching the prior art.

The object is solved by the features of the independent claims. The further independent claims and the dependent claims each comprise optional embodiments of the disclosure.

Accordingly, the object is solved by a driver distraction detection system.

The driver distraction detection system comprises an ultrasonic device. The ultrasonic device comprises a first control device and at least one ultrasonic transmitter (and/or ultrasonic sensor) for detecting a motion of a driver of the motor vehicle. The first control device may also be referred to as a master control device. Each of the least one ultrasonic transmitter may comprise an ultrasonic emitter and an ultrasonic receiver, respectively.

The driver distraction detection system comprises at least one second control device for controlling at least one application (and/or functions of at least one application). The at least one second control device may also be referred to as at least one slave control device.

The first control device is configured to obtain motion data of the detected motion from the at least one ultrasonic transmitter.

The first control device is configured to determine a driver distraction based on the obtained motion data and using artificial intelligence, if the detected motion corresponds to a motion of the driver towards a passenger side of the motor vehicle.

The first control device is configured to, if the driver distraction is determined, notify the at least one second control device that the driver is distracted.

The at least one second control device is configured to output a predetermined (and/or stored) control command to the at least one application in reaction to the at least one second control device being notified that the driver is distracted.

Each of the first control device and the at least one second control device may be configured for electronic data processing and/or may be designed as an electronic data processing device, which may comprise, e.g., one or more microprocessors and data memories.

For example, the first control device may be configured to execute software and/or at least one algorithm for processing and analyzing the motion data (or sensor signals and/or data) and/or for executing the artificial intelligence (and/or artificial intelligence models).

The first control device and/or the at least one second control device may, e.g., be an electronic control unit (ECU), respectively. The electronic control unit may be an intelligent processor-controlled unit which may communicate with other modules, e.g., via a central gateway (CGW), and which may, if necessary, form the vehicle electrical system via field buses such as the CAN bus, LIN bus, MOST bus, FlexRay and/or via the automotive Ethernet, e.g., together with telematics control units and/or an environment sensor system.

The artificial intelligence may comprise at least one artificial intelligence model or machine learning model, e.g., at least one neural network. Each model may comprise algorithms to automatically find patterns and correlations in data as input parameters and to make predictions, e.g., for determining a driver distraction, based on this analysis. For this purpose, the models may be individually trained using training data, rather than explicitly programmed for a specific purpose.

The driver distraction detection system described above provides a number of advantages. Among other things, the system provides an increased accuracy in comparison to, e.g., camera and/or infrared based systems due to the advantage of no light interference using ultrasonic sensing. That means, regardless of light conditions, such as low or very intense from the sun or another source, the system is able to execute the driver distraction detection just as expected or at least with very limited degradation. Additionally, when compared to, e.g., any camera-based approach, the computer power involved is advantageously lower.

Furthermore, involving an AI (artificial intelligence) approach to determine whether the driver is distracted provide more accurate results compared to common statistical approaches.

Possible further embodiments of the system described above are explained in detail below.

The first control device may not be configured to output the determined control command to the at least one application. In other words, the first control device may be excluded from outputting the determined control command to the at least one application.

The at least one second control device may not be configured to obtain the motion data and/or determine the driver distraction. In other words, the at least one second control device may be excluded from obtaining the motion data and/or determining the driver distraction.

The artificial intelligence may comprise at least one neural network trained to determine whether the detected motion corresponds to a motion of the driver towards a passenger side, using the obtained motion data as input parameters.

The first control device may be configured to train the at least one neural network (to determine whether the detected motion corresponds to a motion of the driver towards a passenger side).

The detected motion of the driver may correspond to or may comprise a motion of a head of the driver.

The first control device may be configured to determine the driver distraction by constructing at least one 3D image of the head of the driver based on the obtained motion data, and analyzing the constructed at least one 3D image to determine whether the head of the driver has moved towards the passenger side. The analyzing may be performed using the artificial intelligence, such as the at least one neural network using the at least one 3D image as input parameter(s).

The at least one application may comprise at least one application and/or function of a display (or associated with the display) of the motor vehicle. The display may be arranged at the passenger side (inside a cabin of the vehicle).

The predetermined control command may comprise at least one of the following control demands: dimming the display, deactivating the display, pausing content displayed on the display, pausing content outputted in conjunction with the display (e.g., audio of a video displayed on the display, wherein the audio is outputted by at least one speaker of the motor vehicle), and/or displaying a warning message on the display.

The first control device may be configured to notify the at least one second control device that the driver is distracted by means of a programming interface, Bluetooth, TCP/IP (Transmission Control Protocol/Internet Protocol), and/or SOME/IP (Scalable Service-Oriented Middleware over IP).

The driver distraction detection system may be cameraless.

The driver distraction detection system may be expandable to include one or more additional second control devices.

The first control device may be configured to check whether the at least one second control device is subscribed to be notified, e.g., based on stored subscription information. The first control device may be configured to notify the at least one second control device only if the at least one second control device is subscribed.

The above can be summarized in other words and to a possible more specific embodiment of the disclosure as described below, and the following description is to be construed as not being limiting to the disclosure.

The present disclosure may comprise a set of ultrasonic emitter and receiver sensor(s) (also: transmitters) connected to a computer-based system, such as an Electronic Control Unit (ECU) within the vehicle, which may act as a master computer (also: master control device or first control device). The master computer may control the ultrasonic emitter sensor(s) by means of a dedicated software, that may emit ultrasonic waves towards the driver's head. The ultrasonic waves may be reflected and received by the ultrasonic receiver sensor(s) and further processed by a software running in the master computer.

This software may construct a 3D image of the target (driver's head) and may analyze whether the driver's head is oriented towards the co-driver side. Additionally, the software may use deep learn techniques such as an artificial neural network model trained to detect when the driver is being distracted based on his/her head motion.

The software in the master computer may notify all slave computer-based systems (also: slave control devices or second control devices) of any driver distraction occurrence via some interface, such as TCP/IP, SOME/IP, Bluetooth. The slave computers that had previously subscribed for the driver distraction occurrence events from the master computer may perform further actions, not specified by the master computer, upon receival of such events. For example, a slave computer may implement the occurrence of such events by dimming or shutting down the display arranged at the co-driver side. Another example would be to pause any video or music content that might be playing and display some warning on the screen.

Further provided is a motor vehicle comprising the driver distraction detection system described above.

The at least one ultrasonic transmitter may be arrangeable or arranged inside the motor vehicle (e.g., inside a cabin of the motor vehicle) such that detecting a motion of the driver is possible. The at least one ultrasonic transmitter may be orientable or oriented towards a driver side and/or a driver seat of the motor vehicle, e.g., towards a head of the driver in an operational state of the driver distraction detection system (and/or a driving state of the motor vehicle).

The motor vehicle may comprise a display (and/or touchscreen) arranged on the passenger side (of the motor vehicle), optionally inside the cabin of the motor vehicle. The motor vehicle may comprise at least one speaker.

The motor vehicle may comprise an infotainment system and/or home theater system. The display, the touchscreen and/or the at least one speaker may be part of the infotainment system and/or home theater system.

The at least one application may comprise at least one application and/or function of the display. The at least one application may comprise at least one application or function of the infotainment system, home theater system and/or the at least one speaker.

The motor vehicle may be a passenger car, in particular an automobile, or a commercial vehicle, such as a truck.

What has been described above with reference to the driver distraction detection system applies analogously to the motor vehicle and vice versa.

Furthermore, a method for detecting a driver distraction in a motor vehicle is provided. The method may be performable or performed by the driver distraction detection system described above, optionally first control device described above and the at least one second control device described above.

The method comprises obtaining, by a first control device of an ultrasonic device, a motion detected by at least one ultrasonic transmitter (and/or sensor) of the ultrasonic device.

The method comprises determining, by the first control device, a driver distraction based on the obtained motion data and using artificial intelligence, if the detected motion corresponds to a motion of a driver of the motor vehicle towards a passenger side of the motor vehicle.

The method comprises, if the driver distraction is determined, notifying, by the first control device, at least one second control device that the driver is distracted.

The method comprises outputting, by the at least one second control device, a predetermined control command to at least one application in reaction to the at least one second control device being notified that the driver is distracted.

The method may be a computer-implemented method, i.e., one, more, or all steps of the method may be performed at least in part by a computer or device for data processing, optionally. the first control device and the at least one second control device (or the driver distraction detection system).

What has been described above with reference to the driver distraction detection system and the motor vehicle applies analogously to the method and vice versa.

Further provided is a computer program comprising instructions which, when the program is executed by a computer, cause the computer to at least partially execute the method described above.

A program code of the computer program may be in any code, especially in a code suitable for control systems of motor vehicles.

What has been described above with reference to the driver distraction detection system, the motor vehicle and the method applies analogously to the computer program and vice versa.

Furthermore, a computer-readable medium, in particular a computer-readable storage medium, is provided. The computer-readable medium comprises instructions which, when the instructions are executed by a computer, cause the computer to at least partially execute or perform the method described above.

That is, a computer-readable medium comprising a computer program as defined above may be provided. The computer-readable medium may be any digital data storage device, such as a USB flash drive, a hard disk, a CD-ROM, an SD card, or an SSD card (or SSD drive/SSD hard disk).

The computer program does not necessarily have to be stored on such a computer-readable storage medium in order to be made available to the motor vehicle, but may also be obtained externally via the Internet or otherwise.

What has been described above with reference to the method, the driver distraction detection system, the computer program and the motor vehicle applies analogously to the computer-readable medium and vice versa.

An optional embodiment is described below with reference to Figures 1, 2 and 3.
- Fig. 1: shows schematically a driver distraction detection system according to the disclosure;
- Fig. 2: shows schematically a motor vehicle with the driver distraction detection system; and
- Fig. 3: shows schematically a flowchart of a driver distraction detection method according to the disclosure.

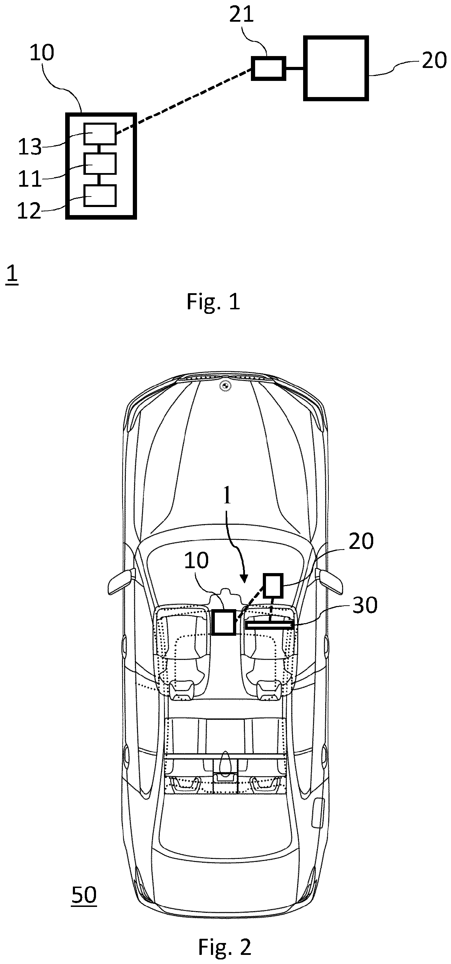

Figure 1 shows only schematically the driver distraction detection system 1 for a motor vehicle 50, comprising an ultrasonic device 10 with a first control device 11 and at least one ultrasonic transmitter 12 for detecting a motion of the driver of the motor vehicle 50, such as a motion of the driver's head.

The driver distraction detection system 1 further comprises at least one second control device 20 for controlling at least one application of the motor vehicle 50. It is conceivable that the driver distraction detection system 1 may also comprise, among other things, a plurality of second control devices 20.

The first control device 11 and the at least one second control device 20 can exchange signals and/or data, e.g., by means of a programming interface, Bluetooth, TCP/IP and/or SOME/IP. For this purpose, the ultrasonic device 10 may comprise a (first) communication interface 13 and the at least one second control device 20 may be connected to or comprise a (second) communication interface 21.

Figure 2 shows only schematically the motor vehicle 50 which comprises the driver distraction detection system 1.

The motor vehicle 50 comprises a display 30 arranged on the passenger side, wherein the at least one application (controlled by the at least one second control device 20) comprises at least one application and/or function of the display 30.

The at least one ultrasonic transmitter 12 is arranged inside the motor vehicle 50 such that detecting a motion of the driver is possible. For instance, the at least one ultrasonic transmitter 12 may be oriented towards the driver's head to detect a motion of the driver's head.

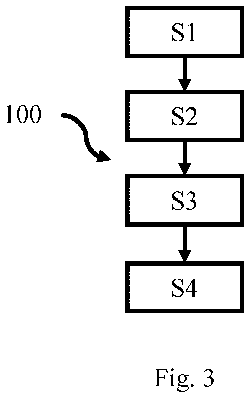

For detecting a driver distraction in the motor vehicle 50, the driver distraction detection system 1 is configured to perform the method 100 described in detail below also with reference to Figure 3.

In a first method step S1, a motion detected by the at least one ultrasonic transmitter 12 of the ultrasonic device 10 is obtained by the first control device 11.

In a second method step S2, a driver distraction based on the obtained motion data and using artificial intelligence is determined by the first control device 11, if the detected motion corresponds to a motion of the driver, e.g., the driver's head, towards a passenger side of the motor vehicle 50.

The artificial intelligence may comprise at least one neural network trained to determine whether the detected motion corresponds to a motion of the driver towards a passenger side, using the obtained motion data as input parameters.

Determining the driver distraction may comprise constructing at least one 3D image of the head of the driver based on the obtained motion data, and analyzing the constructed at least one 3D image to determine whether the head of the driver has moved towards the passenger side. The analyzing may be performed using the artificial intelligence, such as the at least one neural network using the at least one 3D image as input parameter(s).

In a third method step S3, if the driver distraction is determined, the at least one second control device 20 is notified by the first control device 11 that the driver is distracted.

In a fourth method step S4, a predetermined control command is outputted by the at least one second control device 20 to the at least one application in reaction to the at least one second control device 20 being notified that the driver is distracted.

The predetermined control command may comprise at least one of the following control demands: dimming the display 30, deactivating the display 30, pausing content displayed on the display 30, pausing content outputted in conjunction with the display 30 (such as audio of a video displayed on the display 30, wherein the audio is outputted by at least one speaker of the motor vehicle 50), and/or displaying a warning message on the display 30.

### List of reference signs

- 1: driver distraction detection system
- 10: ultrasonic device
- 11: first control device
- 12: ultrasonic transceiver
- 13: communication interface of the mobile device
- 20: second control device
- 21: communication interface of the second control device
- 30: display
- 50: motor vehicle

- 100: method
- S1-S4: method steps

## Claims

1. Driver distraction detection system (1) for a motor vehicle (50), **characterized in that** the driver distraction detection system (1) comprises:
- an ultrasonic device (10) comprising a first control device (11) and at least one ultrasonic transmitter (12) for detecting a motion of a driver of the motor vehicle (50); and
- at least one second control device (20) for controlling at least one application, wherein
- the first control device (11) is configured to:
- obtain (S1) motion data of the detected motion from the at least one ultrasonic transmitter (12);
- determine a driver distraction based on the obtained motion data and using artificial intelligence, if the detected motion corresponds to a motion of the driver towards a passenger side of the motor vehicle (50); and,
- if the driver distraction is determined, notify (S3) the at least one second control device (20) that the driver is distracted; and
- the at least one second control device (20) is configured to:
- output a predetermined control command to the at least one application in reaction to the at least one second control device (20) being notified that the driver is distracted (S4).

2. Driver distraction detection system (1) according to claim 1, **characterized in that** the artificial intelligence comprises at least one neural network trained to determine whether the detected motion corresponds to a motion of the driver towards a passenger side, using the obtained motion data as input parameters.

3. Driver distraction detection system (1) according to claim 1 or 2, **characterized in that** the detected motion of the driver corresponds to or comprises a motion of a head of the driver.

4. Driver distraction detection system (1) according to claim 3, **characterized in that** the first control device (11) is configured to determine the driver distraction by:
- constructing at least one 3D image of the head of the driver based on the obtained motion data; and
- analyzing the constructed at least one 3D image to determine whether the head of the driver has moved towards the passenger side.

5. Driver distraction detection system (1) according to any one of the preceding claims, **characterized in that:**
- the at least one application comprises at least one application and/or function of a display (30) of the motor vehicle (50); and
- the predetermined control command comprises at least one of the following control demands:
- dimming the display (30);
- deactivating the display (30);
- pausing content displayed on the display (30);
- pausing content outputted in conjunction with the display (30); and/or
- displaying a warning message on the display (30).

6. Driver distraction detection system (1) according to any one of the preceding claims, **characterized in that** the first control device (11) is configured to notify (S3) the at least one second control device (20) that the driver is distracted by means of a programming interface, Bluetooth, TCP/IP and/or SOME/IP.

7. Motor vehicle (50), **characterized in that** the motor vehicle (50) comprises the driver distraction detection system (1) according to any one of the preceding claims.

8. Motor vehicle (50), **characterized in that** the motor vehicle (50) comprises a display (30) arranged on the passenger side, wherein the at least one application comprises at least one application and/or function of the display (30).

9. Method (100) for detecting a driver distraction in a motor vehicle (50), **characterized in that** the method (100) comprises:
- obtaining (S1), by a first control device (11) of an ultrasonic device (10), a motion detected by at least one ultrasonic transmitter (12) of the ultrasonic device (10);
- determining (S2), by the first control device (11), a driver distraction based on the obtained motion data and using artificial intelligence, if the detected motion corresponds to a motion of a driver of the motor vehicle (50) towards a passenger side of the motor vehicle (50);
- if the driver distraction is determined, notifying (S3), by the first control device (11), at least one second control device (20) that the driver is distracted; and
- outputting (S4), by the at least one second control device (20), a predetermined control command to at least one application in reaction to the at least one second control device (20) being notified that the driver is distracted.

10. Computer program and/or computer-readable medium, **characterized in that** the computer program and/or computer-readable medium comprises instructions that, when the instructions are executed by a computer, cause the computer to execute the method (100) according to claim 9.
